## Europäisches Patentamt
## European Patent Office
## Office européen des brevets

(19)

(11) Veröffentlichungsnummer: **0 088 334**
**B1**

(12) # EUROPÄISCHE PATENTSCHRIFT

(45) Veröffentlichungstag der Patentschrift:
**13.11.85**

(51) Int. Cl.⁴: **F 16 K 3/08**

(21) Anmeldenummer: **83101968.2**

(22) Anmeldetag: **01.03.83**

(54) Ventiloberteil für Sanitärarmaturen.

(30) Priorität: **05.03.82 DE 3207895**

(43) Veröffentlichungstag der Anmeldung:
**14.09.83 Patentblatt 83/37**

(45) Bekanntmachung des Hinweises auf die Patenterteilung:
**13.11.85 Patentblatt 85/46**

(84) Benannte Vertragsstaaten:
**AT BE CH FR GB IT LI NL SE**

(56) Entgegenhaltungen:
**EP - A - 0 003 459**
**DE - A - 2 349 131**
**DE - A - 2 944 520**
**DE - B - 1 303 204**
**DE - U - 7 522 998**
**US - A - 3 570 810**

(73) Patentinhaber: **Firma Otto Flühs, Lösenbacher Landstrasse 2, D-5880 Lüdenscheid 6 (DE)**

(72) Erfinder: **Lange, Peter, Teutonenstrasse 80 b, D-5880 Lüdenscheid (DE)**

(74) Vertreter: **Dörner, Lothar, Dipl.-Ing., Stresemannstrasse 15, D-5800 Hagen (DE)**

BUNDESDRUCKEREI BERLIN

## Beschreibung

Die Erfindung betrifft ein Ventiloberteil für Sanitärarmaturen mit einem in einem Ventilgehäuse befestigbaren, Durchtrittsöffnungen in seiner Wand aufweisenden hülsenartigen Kopfstück, das an seiner dem Wasserzulauf zugewandten Stirnseite eine Halterung für eine erste, mit Durchtrittsöffnungen versehene Ventilsitzscheibe aus keramischem Material und einen über diese Stirnseite vorstehenden Dichtring aufweist, mit einer in dem Kopfstück drehbaren Spindel, und mit einem mit der Spindel formschlüssig verbundenen, in hohlzylindrischen Wandbereichen Durchtrittsöffnungen aufweisenden Mitnehmer, an dessen dem Wasserzulauf zugewandter Stirnseite eine zweite mit Durchtrittsöffnungen versehene Ventilsitzscheibe aus keramischem Material vorgesehen ist, die an der dem Wasserzulauf abgewandten Seite der ersten Ventilsitzscheibe anliegt und deren Durchtrittsöffnungen durch Drehen der Spindel öffnet oder schließt.

Ein Ventiloberteil der vorgenannten Art ist aus der DE-A-2 944 520 bekannt. Bei dem bekannten Ventiloberteil weist der Mitnehmer auf der dem Wasserzulauf zugewandten Seite die hohlzylindrischen Wandbereiche, auf der axial entgegengesetzten Seite einen in dem Kopfstück drehbaren vollzylindrischen Rotor auf. In den Rotor sind auf der der Spindel zugewandten Stirnseite winkelversetzt Mitnahmeöffnungen sowie zentrisch eine Druckplatte eingelassen. In die Mitnahmeöffnungen greifen achsparallele Vorsprünge der hohlzylindrisch ausgeführten Spindel. Mit der Spindel ist eine Stellschraube verschraubt, deren Spitze an der Druckplatte anliegt. Eine Drehbegrenzung fehlt; die Öffnungs- und Schließbereiche des Ventiloberteils sind also nicht definiert.

Bei anderen bekannten Ventiloberteilen (DE-A-2 349 131; DE-B-1 303 204) ist eine massive Spindel verwendet; der Mitnehmer besteht aus einem vollzylindrischen Rotor. Die Verbindung zwischen der Spindel und dem Rotor ist durch in der Verlängerung der Spindel angeformte Zungen oder Zinken hergestellt, die in Schlitze des Rotors eingreifen. Zur Drehbegrenzung ist an der Spindel ein besonderer Vorsprung oberhalb des Kopfstücks vorgesehen. Bei weiteren bekannten Ventiloberteilen (EP-A-3 459; US-A-3 570 810) ist eine massive Spindel verwendet; der Mitnehmer besteht aus einem an die Spindel angeformten Teller. Der Teller ist direkt mit der zweiten Ventilsitzscheibe verbunden. Die Verbindung erfolgt über an den Teller angeformte Nocken, die in Hohlräume der zweiten Ventilsitzscheibe eingreifen. Zur Drehbegrenzung sind an die zweite Ventilsitzscheibe Vorsprünge angeformt oder es ist durch die Spindel ein Stift gesteckt, die an Vorsprünge im Kopfstück anschlagen.

Diese bekannten Ventiloberteile sind aufwendig konstruiert. Sie gestatten außerdem nicht den Einbau in eine Sanitärarmatur, die mit einem Ventilsitz im Zulaufkanal versehen ist, auf dem abhebbar ein Ventilteller eines Ventilkegels aufliegt; also nicht den Austausch gegen ein Ventiloberteil, bei dem in dem Kopfstück bei Drehbewegung der Spindel der Ventilteller axial bewegt wird, wie es aus der DE-U-7 522 998 bekannt ist.

Der Erfindung liegt die Aufgabe zugrunde, ein Ventiloberteil für Sanitärarmaturen zu schaffen, welches bei einfachem und robustem Aufbau eine sichere und wenig störanfällige Drehbegrenzung unter Verwendung einer massiven Spindel aufweist. Gemäß der Erfindung wird diese Aufgabe dadurch gelöst, daß als Mitnehmer eine hohlzylindrische Hülse vorgesehen ist, deren der Spindel zugewandter Rand mit einer Aufnahme für einen Quersteg versehen ist, der T-förmig an die Spindel angeformt und zwischen Anschlägen in dem Kopfstück drehbar ist.

Bei der Erfindung dient der Quersteg an der Spindel der Mitnahme der hohlzylindrischen Hülse und der Anschlagbegrenzung. Er verhindert, daß die Spindel aus dem Kopfstück nach außen herausgenommen werden kann. Trotzdem kann die Spindel auf einfache Weise als Drehteil hergestellt werden. Die Hülse gewährleistet eine unbeeinträchtigte Wasserführung unter Ausnutzung der ganzen Fläche der keramischen Ventilsitzscheiben.

Ausgestaltungen und Weiterbildungen der Erfindung sind in den Unteransprüchen angegeben. Ein Ausführungsbeispiel der Erfindung ist in der Zeichnung dargestellt und wird im folgenden näher beschrieben. Es zeigt

Fig. 1 ein Ventiloberteil im Längsschnitt,

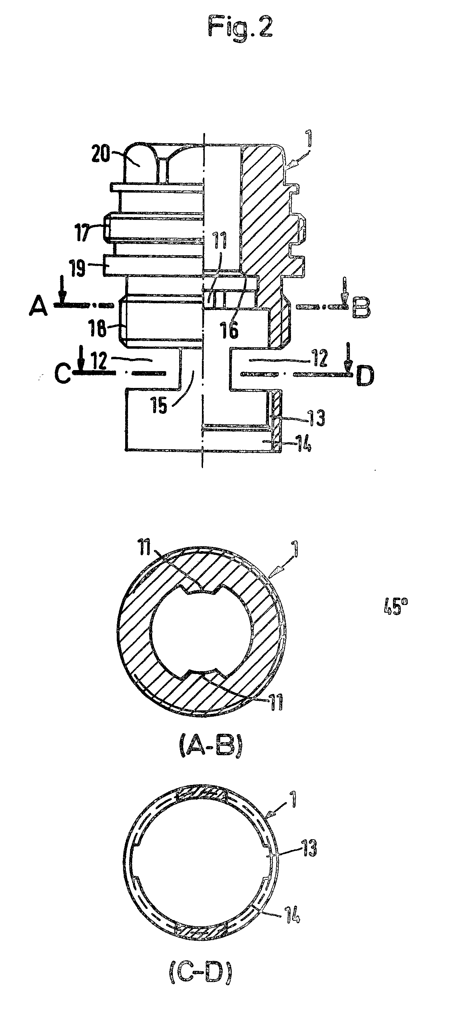

Fig. 2 das bei dem in Fig. 1 dargestellten Ventiloberteil verwendete Kopfstück in Seitenansicht und Längsschnitt sowie zwei Querschnitten,

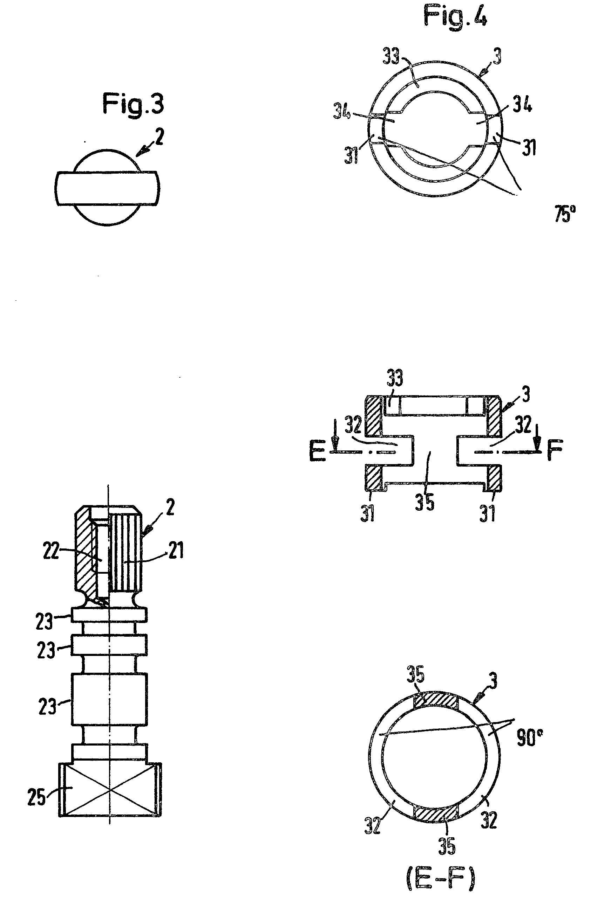

Fig. 3 die bei dem in Fig. 1 dargestellten Ventiloberteil verwendete Spindel in Seitenansicht, teilweise im Längsschnitt sowie in einer Stirnansicht,

Fig. 4 den bei dem in Fig. 1 dargestellten Ventiloberteil verwendeten Mitnehmer im Längsschnitt, einer Stirnansicht und einem Querschnitt.

Das als Ausführungsbeispiel gewählte Ventiloberteil weist drei miteinander verschraubte oder gegeneinander geführte Teile auf, nämlich ein Kopfstück 1, eine das Kopfstück 1 mittig durchsetzende und in ihm radial geführte Spindel 2 sowie einen mit der Spindel 2 formschlüssig verbundenen und im Kopfstück 1 radial geführten Mitnehmer 3. Das Ventiloberteil wird in ein Gehäuse 4 einer Sanitärarmatur geschraubt, von der nur ein Teil des Wasserzulaufkanals dargestellt ist.

Das Kopfstück 1 ist hülsenartig ausgebildet, besteht also aus einem symmetrischen Hohlkörper, allerdings mit unterschiedlichen Innendurchmessern, dessen beide Stirnflächen offen sind.

Wasserzulaufseitig weist das Kopfstück 1 im Bereich der Stirnseite eine Halterung für eine erste Ventilsitzscheibe 5 und einen über die Stirnseite vorstehenden Dichtring 7 auf. Im Anschluß daran sind Durchtrittsöffnungen 12 vorgesehen. Für die Ausbildung der Halterung ist die Innenwandung des Kopfstücks 1 im Anschluß an die zulaufseitige Begrenzung der Durchtrittsöffnungen 12 mit in Längsrichtung 12 mit in Längsrichtung verlaufenden Ausnehmungen 13 für die Aufnahme von Vorsprüngen am Rand der ersten keramischen Ventilsitzscheibe 5 und am freien Ende mit einer ringförmigen Ausnehmung 14 für die Aufnahme des Dichtrings 7 versehen. Die Durchtrittsöffnungen 12 in dem Kopfstück 1 sind von einem ringförmigen Schlitz gebildet, der durch zwei Längsstege 15 unterteilt ist. Auf der dem Wasserzulauf abgewandten Seite der Durchtrittsöffnungen 12 ist das Kopfstück 1 mit zwei Schultern versehen; im Anschluß an die äußere Schulter 16 mit sektorförmigen, durch nach innen vorspringenden Nasen 11 begrenzte Ausnehmungen.

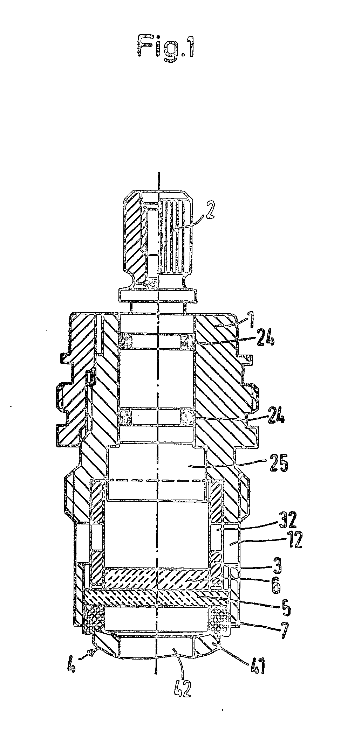

Außen ist im Anschluß an die Durchtrittsöffnungen 12 ein Außengewinde 18 vorgesehen, mit dem das Kopfstück 1 in das Gehäuse 4 einer nicht dargestellten Sanitärarmatur schraubbar ist. Nach dem Einschrauben liegt ein etwa mittig angeordneter Außenflansch 19 des Kopfstücks 1 auf dem Gehäuse der Sanitärarmatur auf. Liegt der Abstand zwischen Unterseite des Außenflansches 19 und Ventilsitz im Gehäuse 4 nicht genau fest, es ist vorteilhaft, das Kopfstück 1 zweiteilig auszuführen und die Teile miteinander zu verschrauben, wie es in Fig. 1 links dargestellt ist. Das Einschrauben in die Sanitärarmatur erfolgt mittels eines Außensechskants 20, der auf der dem Wasserzulauf abgewandten Stirnseite des Kopfstücks 1 vorgesehen ist. Zwischen Außensechskant 20 und Außenfläche 19 ist ein weiteres Außengewinde 17 vorgesehen, das der Aufnahme einer ebenfalls nicht dargestellten Abdeckhülse dient. Von dem Außenflansch 19 bis zum Außensechskant 20 ist das Kopfstück 1 innen als Hohlzylinder für die Führung der Spindel 2 ausgebildet.

Die Spindel 2 ist im wesentlichen massiv ausgeführt und weist einen Steckkopf auf. Sie ist an ihrer dem Wasserzulauf abgewandten Stirnseite außen als Verzahnung 21 ausgeführt und innen mit einem Sackloch 22 mit Innengewinde für die Befestigung eines nicht dargestellten Drehgriffs versehen. Außen sind an der Spindel 2 Ringflächen 23 vorgesehen, mit der die Spindel 2 in dem Kopfstück 1 radial geführt ist. Die Ringflächen 23 sind durch Nuten unterbrochen, in denen Dichtringe 24 untergebracht sind, die die Dichtung zwischen Spindel 2 und Kopfstück 1 übernehmen.

Die Spindel 2 ist in dem Kopfstück 1 begrenzt drehbar. Auf der der Verzahnung 21 entgegengesetzten Seite ist zu diesem Zweck außen an die Spindel 2 ein T-förmiger Quersteg 25 angeformt. Der Quersteg 25 ist zwischen den Nasen 11 in dem Kopfstück 1 drehbar. Der Quersteg 25 liegt mit seiner der Verzahnung 21 zugewandten Fläche an der Schulter 16 des Kopfstücks 1 an.

Der Mitnehmer 3 ist als hohlzylindrische Hülse mit Durchtrittsöffnungen 32 in der Wandung ausgebildet. Die Durchtrittsöffnungen 32 sind von einem ringförmigen Schlitz gebildet, der durch zwei Längsstege 35 unterteilt ist. Die Durchtrittsöffnungen 32 in dem Mitnehmer 3 und die Durchtrittsöffnungen 12 in dem Kopfstück 1 liegen in derselben Querebene. Der ringförmige Schlitz in dem Kopfstück 1 ist in Axialrichtung des Ventiloberteils breiter als der in dem Mitnehmer 3. Die Längsstege 15, 35 sind bei geöffnetem Schlitz in der ersten keramischen Ventilscheibe 5 in derselben Längsmittelebene angeordnet.

Auf der dem Wasserzulauf zugewandten Stirnseite des Mitnehmers 3 ist die zweite Ventilsitzscheibe 6 aus keramischem Material vorgesehen. An dieser Seite ist der Mitnehmer 3 mit Nocken 31 versehen, die in Ausnehmungen am Rand der zweiten keramischen Ventilsitzscheibe 6 eingreifen. Die zweite Ventilsitzscheibe 6 liegt auf der dem Wasserzulauf abgewandten Seite an der ersten Ventilsitzscheibe 5 an und öffnet und schließt deren nicht dargestellte Durchtrittsöffnungen durch Drehen der Spindel 2.

Der der Spindel 2 zugewandte Rand 33 des Mitnehmers 3 ist mit einer Aufnahme für den Quersteg 25 der Spindel 2 versehen. Zu diesem Zweck ist der Rand 33 nach innen eingezogen und mit diametral sich gegenüberliegenden, radial verlaufenden Ausnehmungen 34 versehen, in die der Quersteg 25 der Spindel 2 eingreift. Die lichte Weite des eingezogenen Randes 33 ist kleiner als der Außendurchmesser der Ringflächen 23, deren dem Quersteg 25 benachbarte somit als Anschlag dient. Die Höhe des eingezogenen Randes 33 der hohlzylindrischen Hülse und die Höhe der von den Nasen 11 begrenzten Ausnehmungen in dem Kopfstück 1 sind zusammen gleich der Höhe des Querstegs 25 an der Spindel 2.

Das Kopfstück 1 drückt über die erste ortsfeste Ventilscheibe 5 den Dichtring 7 auf einen Ventilsitz 41 im Wasserzulauf 42 des Gehäuses 4. Nach der Befestigung des Kopfstücks 1 an dem Gehäuse bleibt die Lage des Dichtrings 7 unverändert. Durch Drehung der Spindel 2 wird die zweite Ventilscheibe 6 bezogen auf die erste Ventilscheibe 5 in Anlage miteinander gedreht, so daß die — nicht dargestellten — Durchtrittsöffnungen in den Ventilsitzscheiben 5, 6 geöffnet und geschlossen werden. Die Drehung der Spindel 2 ist über den Quersteg 25 und die Nasen 11 begrenzt.

**Patentansprüche**

1. Ventiloberteil für Sanitärarmaturen mit einem in einem Ventilgehäuse befestigbaren, Durchtrittsöffnungen (12) in seiner Wand aufweisenden hülsenartigen Kopfstück (1), das an seiner dem Wasserzulauf zugewandten Stirnseite eine Halterung für eine erste, mit Durchtrittsöffnungen versehene Ventilsitzscheibe (5) aus keramischem Material und einen über diese Stirnseite vorstehenden Dichtring (7) aufweist, mit einer in dem Kopfstück (1) drehbaren Spindel (2), und mit einem mit der Spindel (2) formschlüssig verbundenen, in hohlzylindrischen Wandbereichen Durchtrittsöffnungen (32) aufweisenden Mitnehmer (3), an dessen dem Wasserzulauf zugewandter Stirnseite eine zweite mit Durchtrittsöffnungen versehene Ventilsitzscheibe (6) aus keramischem Material vorgesehen ist, die an der dem Wasserzulauf abgewandten Seite der ersten Ventilsitzscheibe (5) anliegt und deren Durchtrittsöffnungen durch Drehen der Spindel (2) öffnet oder schließt, dadurch gekennzeichnet, daß als Mitnehmer (3) eine hohlzylindrische Hülse vorgesehen ist, deren der Spindel (2) zugewandter Rand (33) mit einer Aufnahme für einen Quersteg (25) versehen ist, der T-förmig an die Spindel (2) angeformt und zwischen Anschlägen in dem Kopfstück (1) drehbar ist.

2. Ventiloberteil nach Anspruch 1, dadurch gekennzeichnet, daß der der Spindel (2) zugewandte Rand (33) des Mitnehmers (3) nach innen eingezogen ist und mit diametral sich gegenüberliegenden, radial verlaufenden Ausnehmungen (34) versehen ist, in die der Quersteg (25) der Spindel (2) eingreift.

3. Ventiloberteil nach Anspruch 2, dadurch gekennzeichnet, daß die lichte Weite des eingezogenen Randes (33) des Mitnehmers (3) kleiner ist als der Außendurchmesser von sich an den Quersteg (25) anschließenden Ringflächen (23) der Spindel (2).

4. Ventiloberteil nach einem der Ansprüche 1 bis 3, dadurch gekennzeichnet, daß der dem Wasserzulauf zugewandte Rand des Mitnehmers (3) mit Nocken (31) versehen ist, die in Ausnehmungen am Rand der zweiten keramischen Ventilsitzscheibe (6) eingreifen.

5. Ventiloberteil nach einem der Ansprüche 1 bis 4, dadurch gekennzeichnet, daß die Durchtrittsöffnungen (32; 12) in den Mitnehmer (3) und in dem Kopfstück (1) von ringförmigen Schlitzen gebildet sind, die in derselben Querebene liegen, von denen der ringförmige Schlitz in dem Kopfstück (1) in Axialrichtung des Ventiloberteils breiter ist und die beide durch Längsstege (35; 15) unterteilt sind, die bei geöffnetem Schlitz in der ersten keramischen Ventilsitzscheibe (5) in derselben Längsmittelebene angeordnet sind.

6. Ventiloberteil nach Anspruch 1 oder 5, dadurch gekennzeichnet, daß das Kopfstück (1) mit einer Schulter (16) versehen ist, an der der Quersteg (25) mit seiner der Spindel (2) zugewandten Fläche anliegt und im Anschluß an die Schulter (16) mit sektorförmigen, durch nach innen vorspringenden Nasen (11) begrenzte Ausnehmungen versehen ist.

7. Ventiloberteil nach den Ansprüchen 2 und 6, dadurch gekennzeichnet, daß die Höhe des eingezogenen Randes (33) des Mitnehmers (3) und die Höhe der Ausnehmung in dem Kopfstück (1) zusammen gleich der Höhe des Querstegs (25) an der Spindel (2) sind.

## Claims

1. Valve top part for sanitary fittings, with a sleeve-like head piece (1) which can be fastened in a valve housing and has through-orifices (12) in its wall, and which has, on its end face pointed towards the water inflow, a mount-ing for the first valve-seat disc (5), provided with through-orifices and made of ceramic material, and a sealing ring (7) projecting beyond this end face, with a spindle (2) rotatable in the head piece (1), and with an engaging means (3) which is connected positively to the spindle (2) and has through-orifices (32) in hollow-cylindrical wall regions, and on the end face of which, pointed towards the water inflow, there is a second valve-seat disc (6) made of ceramic material, which is provided with through-orifices and rests against the side of the first valve-seat disc (5) facing away from the water inflow and which opens or closes the through-orifices of the latter as a result of the rotation of the spindle (2), characterised in that there is as an engaging means (3) a hollow-cylindrical sleeve, of which the edge (33) facing the spindle (2) is provided with a receptable for a crosspiece (25) which is formed in the shape of a T on the spindle (2) and which is rotatable between stops in the headpiece (1).

2. Valve top part according to Claim 1, characterised in that the edge (33) of the engaging means (3) facing the spindle (2) is drawn inwards and is provided with radially extending recesses (34) which are located diametrically opposite one another and into which engages the crosspiece (25) of the spindle (2).

3. Valve top part according to Claim 2, characterised in that the clear width of the drawn-in edge (33) of the engaging means (3) is less than the outside diameter of annular surfaces (23) of the spindle (2) which adjoin the crosspiece (25).

4. Valve top part according to one of Claims 1 to 3, characterised in that the edge of the engaging means (3) pointed towards the water inflow is provided with projections (31) which engage into recesses in the edge of the second ceramic valve-seat disc (6).

5. Valve top part according to one of Claims 1 to 4, characterised in that the through-orifices (32; 12) in the engaging means (3) and in the headpiece (1) are formed by annular slits lying in the same transverse plane, of which the annular slit in the head piece (1) is wider in the axial direction of the valve top part, both being divided by longitudinal webs (35; 15) which, when the slit in the first ceramic valve-seat disc (5) is opened, are arranged in the same longitudinal centre plane.

6. Valve top part according to Claim 1 or 5, characterised in that the head piece (1) is provided with a shoulder (16), against which the crosspiece (25) rests by means of its surface facing the spindle (2), and is provided adjacent to the shoulder (16) with sector-shaped recesses limited by lugs (11) projecting inwards.

7. Valve top part according to Claims 2 and 6, characterised in that the height of the drawn-in edge (33) of the engaging means (3) and the height of the recess in the head piece (1) are together equal to the height of the crosspiece (25) on the spindle (2).

**Revendications**

1. Partie supérieure de robinet pour robinetterie sanitaire, comportant une tête (1) en forme de manchon pouvant être fixée dans un corps de robinet et comportant des orifices de passage (12) dans sa paroi, laquelle comporte sur son côté frontal tourné vers l'arrivée d'eau une fixation pour un premier disque de siège de clapet (5) en matériau céramique, pourvu d'orifices de passage, et un joint d'étanchéité (7) annulaire, débordant au-delà de ce côté frontal, et comportant une clef (2) pouvant tourner dans la tête (1) et un untraîneur (3) relié à la clef (2) par coopération de formes et comportant dans des zones de paroi en forme de cylindre creux des orifices de passage (32) sur le côté frontal, tourné vers l'arrivée d'eau, duquel est prévu un second disque de siège de clapet (6) en matériau céramique pourvu d'orifices de passage, qui appuie sur le côté du premier disque de siège de clapet (5) opposé à l'arrivée d'eau et ouvre ou ferme les orifices de passage de celui-ci par une rotation de la clef (2), caracrérisé en ce qu'on prévoit comme entraîneur (3) un manchon en forme de cylindre creux, dont le bord (33) tourné vers la clef (2) est muni d'un logement pour une barrette transversale (25) formée sur la clef (2) et pouvant tourner dans la tête (1) entre des butées.

2. Partie supérieure de robinet selon la revendication 1, caractérisée en ce que le bord (33) de l'entraîneur (3) tourné vers la clef (2) est rentré vers l'intérieur et est muni d'évidements (34) s'étendant radialement et diamétralement opposés, dans lesquels pénètre la barrette transversale (25) de la clef (2).

3. Partie supérieure de robinet selon la revendication 2, caractérisée en ce que le diamètre intérieur du bord rentré (33) de l'entraîneur (3) est plus petit que le diamètre extérieur des surfaces annulaires (23) de la clef (2) se raccordant à la barrette transversale (25).

4. Partie supérieure de robinet selon l'une des revendications 1 à 3, caractérisée en ce que le bord de l'entraîneur (3) tourné vers l'arrivée d'eau est pourvu de saillies (31) qui pénètrent dans des évidements sur le bord du second disque de siège de clapet (6) en céramique.

5. Partie supérieure de robinet selon l'une des revendications 1 à 4, caractérisée en ce que les orifices de passage (32; 12) dans l'entraîneur (3) et dans la tête (1) sont constitués par des fentes annulaires qui sont dans le même plan transversal, et dont la fente annulaire se trouvant dans la tête (1) est plus large dans le sens axial de la partie supérieure de robinet et en ce que les deux fentes sont divisées par des bandeaux longitudinaux (35, 15), qui, lorsque la fente dans le premier disque de siège de clapet céramique (5) est ouverte, se trouvent dans le même plan longitudinal médian.

6. Partie supérieure de robinet selon la revendication 1 ou 5, caractérisée en ce que la tête (1) est munie d'un épaulement (16) contre lequel la barrette transversale (25) appuie par sa surface tournée vers la clef (2) et en ce qu'elle est munie, au raccordement avec l'épaulement (16), d'évidements en forme de secteurs délimités par des becs (11) saillant vers l'intérieur.

7. Partie supérieure de robinet selon les revendications 2 et 6, caractérisée en ce que la hauteur du bord rentré (33) de l'entraîneur (3) et la hauteur de l'évidement dans la tête (1) sont ensemble égales à la hauteur de la barrette transversale (25) sur la clef (2).

# Fig.1

0 088 334

Fig.2

(A-B)

45°

(C-D)

9

# Fig.3

# Fig.4

75°